# DEMANDE DE BREVET EUROPEEN

(11) **EP 0 629 056 A1**
(43) Date de publication de la demande: **14.12.1994**
(21) Numéro de dépôt: 94401280.6
(22) Date de dépôt: 08.06.1994
(51) Int. Cl.: H04B 7/26

(54) **Méthode de gestion pas à pas de la réallocation de fréquences dans un système de radiocommunication mobile cellulaire**

(30) Priorité: 09.06.1993 FR 9306938
(71) Demandeur: ALCATEL MOBILE COMMUNICATION FRANCE, 75008 Paris (FR); ALCATEL N.V., NL-1077 XX Amsterdam (NL)
(72) Inventeur: Dupuy, Pierre, F-75017 paris (FR); Freulon, Anne, F-75017 paris (FR)
(74) Mandataire: Renaud-Goud, Thierry

(57) **Abrégé**

Le domaine de l'invention est celui de la radiocommunication cellulaire avec des stations mobiles, notamment selon le standard GSM.

L'objectif est de fournir un procédé sûr, dépourvu de contraintes lourdes pour le réseau comme pour le mobile et ne s'appuyant que sur des procédures existantes entre mobile et réseau.

Selon l'invention, la redéfinition de fréquences est effectuée intervalle de temps par intervalle de temps, en libérant pas à pas chaque intervalle de temps par suppression de toute communication dans ledit intervalle, puis en assurant une redéfinition fréquentielle dudit intervalle de temps libéré en lui affectant la nouvelle liste de fréquences, et enfin en rendant ledit intervalle de temps à nouveau disponible au trafic.

## Description

Le domaine de l'invention est celui de la radiocommunication cellulaire avec des stations mobiles, notamment selon le standard GSM.

Le système GSM consiste à décomposer l'espace d'évolution des stations mobiles en un réseau de cellules adjacentes. A chaque cellule est associée une station de base émettrice/réceptrice distincte. Les radiocommunications mettant en jeu une station mobile se trouvant dans une cellule donnée s'établissent avec la station de base de la cellule en question.

Les procédures d'établissement des communications suivent un protocole spécifique qui sort du cadre de la présente invention. En régime de communication établi, un canal de communication bidirectionnel spécifique (canal de trafic TCH) est affecté à chaque station mobile. Un même canal de trafic est partagé en multiplex temporel par plusieurs stations mobiles (typiquement 8 actuellement). . Selon la norme GSM actuelle, un canal de trafic est défini par une liste de fréquences. Un algorithme de gestion de saut de fréquence entre les fréquences de la liste permet de rendre la transmission relativement robuste au phénomène d'évanouissement (fading).

L'allocation des canaux, et donc des listes de fréquence, dans les différentes cellules du réseau, est gérée par un module central du réseau. L'allocation des fréquences dans le réseau et le cas échéant les règles de saut de fréquence sont effectuées d'une manière permettant d'éviter les interférences intra- et intercellulaires.

Chaque canal de trafic se voit allouer une liste de fréquences donnée de façon relativement stable en principe. Toutefois, il peut arriver que le module central du réseau souhaite mettre en oeuvre une redéfinition fréquentielle du canal. Il peut ainsi s'agir de pallier la panne d'une porteuse, de résoudre des risques d'interférences amenés par une extension du réseau, etc....

Les conditions dans lesquelles s'effectue la redéfinition fréquentielle d'un canal ne sont pas indifférentes. En effet, il peut se poser des problèmes de continuité des communications en cours, notamment dans deux cas de figure :
- le cas où une station mobile est en train de changer de canal de communication au sein de la même cellule, aux environs du moment de la redéfinition fréquentielle du canal d'origine et/ou du canal cible. Il peut s'agir alors, selon la terminologie GSM, soit d'un "immediate assignment" (cas du passage d'un canal de diffusion à un canal dédié, soit d'un "normal assignment" (transfert entre deux canaux dédiés), comme il sera détaillé plus loin ;
- le cas où une station mobile est en train de changer de cellule (cas du "hand-over") aux environs du moment de la redéfinition fréquentielle du canal d'origine et/ou du canal cible.

D'autre part, se pose le problème du comportement d'une station mobile dans le cas où celle-ci ne peut exécuter la redéfinition fréquentielle de son canal de trafic. Ceci peut notamment se produire en cas d'erreur de protocole, si la station mobile ne peut lire ou ne peut interpréter les messages de signalisation relatifs à la redéfinition fréquentielle réalisée.

Un certain nombre de solutions sont actuellement proposées pour faire face à ces différentes situations problématiques.

Ainsi, concernant la perte de communication avec une station mobile consécutivement à une impossibilité pour le mobile d'exécuter le message de redéfinition fréquentielle, la solution actuelle consiste pour la station mobile à ignorer le message perdu. En conséquence, la station mobile continue à émettre selon les anciennes fréquences, jusqu'à détection de la perte de communication. Ceci entraîne l'inconvénient que pendant le laps de temps qui s'écoule avant l'interruption de l'émission de la station mobile, cette émission est une source potentielle d'interférence.

Dans le cas d'une redéfinition fréquentielle quasi-simultanée à un changement de canal ou de cellule, deux solutions ont été proposées jusqu'à présent.

Une première solution, préconisée par la norme 04.08.V3.13.0, consiste à retarder systématiquement le changement de canal ou de cellule pour le faire coïncider avec l'instant de redéfinition de fréquence. Dans l'hypothèse d'un changement de cellule, il y aura donc alignement sur l'instant d'une redéfinition fréquentielle dans la cellule cible. Le changement de canal ou de cellule s'effectue donc, selon cette solution, dans le cadre de la nouvelle définition de fréquence.

Cette première solution présente plusieurs inconvénients, notamment un dilemme quant à la valeur du retard acceptable.

En effet, si le retard est trop important, il risque d'entraîner une dégradation importante de la liaison prolongée, particulièrement s'il s'agit d'un changement de cellule. Ce risque de dégradation est non négligeable, d'autant plus que le GSM prévoit une sorte d'hystérésis qui permet d'éviter les papillonnements d'une cellule à l'autre lors des déplacements le long d'une frontière intercellulaire. Le changement de cellule n'intervient en effet qu'après une sortie de cellule relativement franche et durable, au prix d'une tolérance d'une légère détérioration temporaire de la communication pendant le délai de vérification de la stabilité de la sortie de cellule, détérioration qui serait encore accrue par le retard de commutation proposé.

Il serait théoriquement possible d'imposer une valeur maximale à ce retard pour limiter les risques de détérioration des communications, notamment si le réseau impose un délai maximal pour l'intervalle qui sépare l'annonce d'une redéfinition fréquentielle de son exécution. Mais hormis la contrainte pénalisante que cela entraine pour le réseau, ce délai maximal présente aussi l'inconvénient de ne pas pouvoir être considérablement raccourci car il faut préserver le temps nécessaire au démarrage des porteuses, aux synchronisations, etc...

Une seconde solution, en cours d'évaluation, présente une meilleure souplesse, mais au prix d'une plus grande complexité.

Le principe proposé dans cette seconde solution consiste à faire gérer par la station mobile quatre listes de fréquence à la fois, à savoir les définitions fréquentielles anciennes et nouvelles tant du canal d'origine que du canal cible (que le canal cible soit au sein de la même cellule (assignment) ou dans une nouvelle cellule (hand-over)). En cas de changement de cellule, ce principe permet que la station mobile revienne à l'ancienne cellule au cas où elle n"'accrocherait" pas dans la nouvelle cellule. Mais celà accroît corrélativement les exigences en capacité mémoire, en capacité de traitement embarquées, et en lourdeur des messages de signalisation à échanger.

Une troisième solution, décrite dans le brevet 93.02308 propose une voie médiane entre la première solution, peu sûre, et la deuxième solution, complexe à mettre en oeuvre dans le mobile comme dans le réseau. Il s'agit d'indiquer au mobile, lors de la commande de changement de cellule, à quelle heure un changement de fréquence est prévu dans la cellule destinataire. Le mobile, connaissant par ailleurs l'heure dans cette nouvelle cellule, l'heure de la cellule courante et à quelle heure un changement de fréquence est prévu dans la cellule courante (éventuellement), va pouvoir définir le temps lui restant pour terminer son passage dans la nouvelle cellule ou revenir dans sa cellule actuelle en cas d'échec lors de sa tentative de changement de cellule. Si ce temps est supérieur au temps restant avant le changement de fréquence dans une des deux cellules, il refuse alors de procéder au transfert inter-cellulaire (handover) et en avertit le réseau qui pourra alors réessayer plus tard.

Si cette méthode semble un bon compromis entre les deux solutions précédentes, il reste que toutes ces méthodes présentent le même défaut : la quasi-totalité de la complexité est reportée dans le mobile parce que le réseau n'a pas une connaissance fine de l'heure dans l'ensemble du réseau de cellule. Par ailleurs, ces méthodes induisent également une contrainte forte de synchronisation temporelle du changement de fréquence dans le réseau : la redéfinition de fréquence doit être faite exactement au même instant dans une cellule, dans l'équipement d'infrastructure comme dans le mobile.

L'invention a pour objectif de pallier les défauts des solutions existantes en fournissant un procédé sûr, dépourvu de contraintes lourdes pour le réseau comme pour le mobile et ne s'appuyant que sur des procédures existantes entre mobile et réseau, garantissant par là l'absence de problèmes de compatibilité toujours à craindre lors de l'introduction de nouveaux procédés pouvant interagir avec des procédés existants.

Cet objectif, ainsi que d'autres qui apparaîtront par la suite, sont atteints selon l'invention à l'aide d'un procédé de redéfinition de fréquence pour un système de radiocommunication cellulaire mis en oeuvre au sein d'un réseau de cellules parcouru par des stations mobiles, où une communication est établie avec un mobile dans un canal de communication (on entend par canal de communication un canal dédié (par exemple de type canal TCH en GSM))disponible dans la cellule dans laquelle se trouve ladite station mobile, les communications étant acheminées dans un multiplex temporel dont les trames successives sont formées d'intervalles de temps ("time-slots") contenant chacun au moins un canal de communication, chaque communication étant acheminée par segments dans un même intervalle de temps sur plusieurs trames dudit multiplex,
chaque canal de communication étant en outre défini par une liste de fréquences exploitables pour assurer ladite communication, ladite liste de fréquences étant redéfinissable, sous commande d'un module de gestion du réseau de radiocommunication, de façon à remplacer une première liste de N fréquences par une seconde liste de M fréquences (M égal à ou différent de N),
le procédé de l'invention étant caractérisé en ce que le remplacement de la première liste de fréquences par la seconde est effectué intervalle de temps par intervalle de temps, en libérant pas à pas chaque intervalle de temps par suppression de toute communication dans ledit intervalle, puis en assurant une redéfinition fréquentielle dudit intervalle de temps libéré en lui affectant ladite seconde liste de M fréquences, et enfin en rendant ledit intervalle de temps à nouveau disponible au trafic.

Ainsi, selon l'invention, une fois qu'au moins un des "time slots" (intervalles de temps) a été complètement libéré, il peut être remis en trafic avec la nouvelle définition de fréquence sans qu'il y ait le moindre problème avec des mobiles puisqu'à ce moment-là aucun mobile n'utilise de canaux dédié sur ce time slot. On peut noter avec intérêt un des avantages de l'invention par rapport à l'art antérieur: le changement de fréquence dans l'infrastructure n'a pas besoin d'être réalisé à un instant extrêmement précis. Un délai de prise en compte de demande de changement de fréquence aura un impact sur la durée totale de la procédure mais pas sur son succès.

La répétition de ces phases de libération de time slot suivi de la redéfinition de fréquence du time slot libéré suivi de sa remise en service avec la nouvelle définition de fréquence permet de changer pas à pas la définition de fréquence de tous les canaux de communication sans jamais avoir à connaître les changements de fréquences des cellules voisines ni avoir à leur faire connaître le changement de fréquences en cours.

La procédure de libération de tous les canaux dédiés d'un time slot (intervalle de temps) peut être notamment l'un quelconque des procédés envisageables par l'homme du métier. Il peut s'agir par exemple, de déplacer les mobiles sur d'autres canaux de communication libres de la même cellule (en GSM, par une procédure de "normal assignment"), de déplacer les mobiles dans une autre cellule par des procédures de transfert intercellulaire (en GSM, handover), de rompre les appels, d'interdire l'établissement de nouveaux appels sur un ou plusieurs "time slots" à libérer, ..., ou encore d'attendre la libération par interruption naturelle des communications.

Dans un mode de réalisation avantageux, l'étape de libération de chaque intervalle de temps consiste à attendre pendant un délai prédéterminé une libération naturelle d'au moins un intervalle de temps, et, à défaut de libération naturelle pendant ledit délai prédéterminé, à effectuer une libération forcée par transfert intra- ou intercellulaire, ou encore par interruption forcée de la communication, par exemple.

Le premier intervalle de temps libéré est avantageusement celui qui se libère naturellement le premier. Toutefois, préférentiellement, dans le cas où la redéfinition fréquentielle concerne une trame comprenant un intervalle de temps particulier incluant un canal de communication utilisant une fréquence balise non affectée par la redéfinition fréquentielle, le premier intervalle de temps libéré est ledit intervalle de temps particulier.

Tel est le cas notamment pour les intervalles de temps incluant un canal BCCH dans une trame de type TCH. Ce type de canal est acheminé sur une fréquence particulière (sans saut de fréquence), qui n'est susceptible d'être modifiée que beaucoup plus rarement, et en tout cas indépendamment des autres fréquences exploitées pour la trame.

On notera que dans ce cas où la fréquence balise n'est pas modifiée, il y a moins de canaux dédiés à déplacer sur cet intervalle de temps particulier que sur les autres : il y aura toujours intérêt à libérer d'abord cet intervalle de temps particulier dans les cas où le nombre de canaux à déplacer est supérieur au nombre de canaux libres.

Si la fréquence balise doit être changée, cet intervalle de temps particulier ne doit alors plus être considéré comme un cas particulier.

Selon l'invention, dans le cas où la seconde liste de fréquences comprend au moins autant de fréquences que la première, le remplacement de la première liste de fréquences par la seconde est effectué intervalle de temps par intervalle de temps, préférentiellement selon le processus suivant :
- on libère au moins un premier intervalle de temps par suppression de toute communication dans ledit intervalle de temps ;
- on assure la redéfinition fréquentielle dudit premier intervalle de temps libéré en lui affectant ladite seconde liste de M fréquences, et on rend ledit intervalle de temps à nouveau disponible au trafic ;
- on libère un second intervalle de temps par transfert des communications dudit second intervalle de temps audit premier intervalle de temps ;
- on assure la redéfinition fréquentielle dudit second intervalle de temps libéré en lui affectant ladite seconde liste de M fréquences, et on rend ledit second intervalle de temps à nouveau disponible au trafic ;
- on poursuit itérativement le transfert de communications d'intervalle de temps en intervalle de temps, jusqu'à obtenir une redéfinition fréquentielle de tous les intervalles de temps du canal de communication.

Comme variante au cas précédent, il est également possible dans le cas d'un ajout de fréquence(s) dans une cellule, de libérer un ou plusieurs time slots en déplaçant au moins temporairement les mobiles sur cette (ces) nouvelle(s) fréquence(s) par des procédés classiques de "normal assignment" (transfert GSM entre deux canaux dédiés). L'intérêt de cette variante est d'éviter d'attendre ou de forcer la libération d'un time slot lorsque tous les canaux de communication sont occupés au moment du changement puisque de nouveaux canaux de communication sont créés avant de devoir libérer les canaux existants. En contrepartie de ces avantages, cette variante va obliger à déplacer deux fois ces mobiles : une fois pour les déplacer sur cette fréquence additionnelle et une deuxième fois pour leur donner une définition de fréquence complète.Mais on peut noter qu'en l'absence de saut de fréquence, ce deuxième déplacement est inutile puisque les mobiles n'utilisent alors qu'une seule fréquence, quel que soit le nombre de fréquences utilisables dans la cellule.

Le procédé décrit ci-dessus s'applique évidemment aussi au cas où la redéfinition fréquentielle aboutit au retrait d'une (ou plusieurs) fréquence(s). On notera, bien que ce soit une évidence, que l'opération ne pourra se dérouler sans interrompre d'appels ni déplacer un mobile d'une cellule à l'autre que dans le cas où la nouvelle définition de fréquence ne réduit pas la capacité de trafic de la cellule à un niveau inférieur au nombre de mobiles en communication dans la cellule avant le changement de fréquence.

Le procédé décrit ci-dessus s'applique également au cas où la redéfinition de fréquence consiste à changer une ou plusieurs fréquences, sans changer la capacité de trafic de la cellule.

Deux cas doivent alors être considérés, suivant la façon dont cette fréquence peut être changée.

Dans un premier cas, le changement de fréquence peut être fait indépendamment sur tous les time slots. Il suffit alors de suivre le processus déjà décrit, en tenant compte du fait que la capacité de trafic de la cellule n'est pas accrue : il faudra soit attendre que des communications se terminent soit forcer les coupures de communication lorsqu'il n'est pas possible de libérer un time slot complet par des normal assignment ou des handovers vers d'autres cellules. Cette dernière éventualité doit toutefois être considérée comme étant extrêmement rare, si on accepte d'attendre quelques secondes pour que des appels se terminent naturellement, la durée moyenne d'un appel par radio étant de l'ordre d'une minute.

Dans un deuxième cas, le changement de fréquence ne peut être fait que simultanément sur tous les times slots, ce changement de fréquence nécessitant alors un temps non nul. Tel est le cas, notamment, si le réseau comprend des émetteurs à fréquence fixe, ou si les moyens de changement de fréquence demandent un temps sensible de reconfiguration (cas des cavités à ajustement mécanique). Dans ce cas, le processus de mise en oeuvre de l'invention est avantageusement utilisé deux fois. La première fois, le processus est utilisé pour retirer la fréquence qui doit disparaître. Si cette fréquence était utilisée par une seule communication, l'invention prévoit donc la libération, naturelle ou forcée, de cette communication spécifique. Si la fréquence est utilisée selon un processus de saut de fréquence, celui-ci doit pouvoir se poursuivre temporairement avec une fréquence disponible en moins ; ceci signifie qu'il sera nécessaire de libérer (temporairement) au moins un canal de communication. Une fois ceci fait, la fréquence est changée dans la cellule. Puis, ce changement effectué, le processus de l'invention est réutilisé pour exploiter cette nouvelle fréquence sur l'ensemble des intervalles de temps.

Un autre point important à considérer est le fonctionnement du système lorsque des transferts inter-cellulaires ("handovers") sont nécessaires ou souhaitables entre le début et la fin du processus. Deux cas sont à considérer, suivant qu'il s'agit d'un mobile devant soit quitter soit rejoindre la cellule où le changement de fréquence est en cours de réalisation.

Lorsqu'un mobile de la cellule doit la quitter pour une autre cellule, il suffit de veiller à attendre que le canal occupé par ce mobile soit complètement libéré, au moment où le transfert vers l'autre cellule se termine avec succès (c'est-à-dire, jusqu'au moment de la réception du signal GSM "HANDOVER COMPLETE").

Lorsqu'un mobile doit venir dans la cellule où le changement de fréquence est en cours, à nouveau deux cas doivent être considérés.

Dans un premier cas, I'arrivée de ce mobile ne compromet pas la libération complète d'un time slot : il n'y a alors aucun problème pour accepter ce mobile qui sera alors traité comme un mobile normal en cas de succès du transfert. En cas d'échec du transfert, le canal sera libéré lorsque ce mobile reviendra dans son ancienne cellule. On peut noter qu'il y aura toutefois intérêt à allouer à ce mobile un canal correspondant à la nouvelle liste de fréquence pour lui éviter un transfert intra-cellulaire ("normal assignment") dans la nouvelle cellule peu de temps après.

Dans un deuxième cas, I'arrivée d'un mobile n'est pas compatible avec la procédure de redéfinition de time slot en cours : ces handovers ne peuvent être acceptés. Ceci est le cas par exemple, quand la redéfinition fréquentielle entraîne une réduction (temporaire ou définitive) de capacité, avec interdiction de toute affectation d'une nouvelle communication dans les intervalles de temps en cours de redéfinition.

Un autre cas à considérer est celui où un mobile accède pour la première fois à la cellule dans laquelle intervient une redéfinition fréquentielle. Dans le standard GSM, la procédure d'établissement d'appel s'effectue en transférant (par un "immediate assignment") l'échange d'informations de signalisation depuis un canal de diffusion vers un canal dédié, typiquement TCH, ou mieux SDCCH moins consommateur de trafic. Ces deux types de canaux dédiés sont susceptibles chacun d'encourir une procédure de redéfinition fréquentielle. Pour optimiser le processus, on prévoir que :
- tous les nouveaux transferts sont directement effectués sur un canal associé à la nouvelle liste de fréquence ;
- toutes les communications établies en cours au moment d'une redéfinition fréquentielle sont progressivement envoyés sur un canal associé à la nouvelle liste de fréquence ;
- pour tous les transferts en cours, c'est-à-dire pour lesquels un "immediate assignment" a été initié sans qu'il soit achevé, il faut tenir compte que lors du premier accès, le mobile met un certain temps à se connecter effectivement : il convient d'allouer les canaux du nouveau time slot dès qu'il est redéfini mais de ne reconfigurer l'ancien time slot que lorsqu'il est certain que le mobile s'est effectivement connecté suite à l'"immediate assignment" (réception du signal GSM "ASSIGNMENT COMPLETE"), ou que le transfert est avorté.

En l'occurrence, l'attente maximale que doit prévoir le système avant de libérer un canal SDCCH est bornée par la procédure GSM (comme d'ailleurs pour un "handover") puisque le GSM fait automatiquement d'ores et déjà avorter une demande de transfert non suivie d'effet après un délai prédéterminé.

Dans tous les cas, le processus utilisé garantit que le nombre de canaux SDCCH n'est jamais réduit pendant le changement de fréquence puisque les canaux SDCCH sont recréés avec la nouvelle loi de fréquence avant d'être utilisés.

En résumé, dans le cas où une redéfinition fréquentielle intervient alors qu'un transfert appartenant au groupe comprenant les transferts vers une autre cellule et les demandes de premier accès (affectant un canal à redéfinir en fréquence) est en cours, le canal correspondant et associé à l'ancienne liste de fréquences à remplacer n'est considéré comme libéré qu'après validation du succès dudit transfert, c'est-à-dire avantageusement après écoulement d'un délai prédéterminé.

Par ailleurs, dans le cas où un transfert appartenant au groupe comprenant le transfert d'un mobile depuis une autre cellule et la demande de premier accès, intervient au moment de la redéfinition fréquentielle, la communication est établie de préférence sur un intervalle de temps déjà associé à la nouvelle définition fréquentielle.

D'autres caractéristiques et avantages de l'invention apparaîtront à la lecture de la description suivante d'un mode de réalisation donné à titre d'exemple non limitatif, et des dessins annexés dans lesquels :
- la figure 1 schématise un réseau de radiocommunication cellulaire du type GSM, dans lequel peut être mis en oeuvre le procédé suivant l'invention.
- la figure 2 illustre la structure d'une trame typique acheminant des canaux de trafic bidirectionnel (TCH) en multiplex temporel.
- la figure 3 illustre une première méthode de réalisation de la redéfinition de fréquence conformément à l'invention.
- la figure 4 illustre une seconde méthode de réalisation de la redéfinition de fréquence conformément à l'invention.

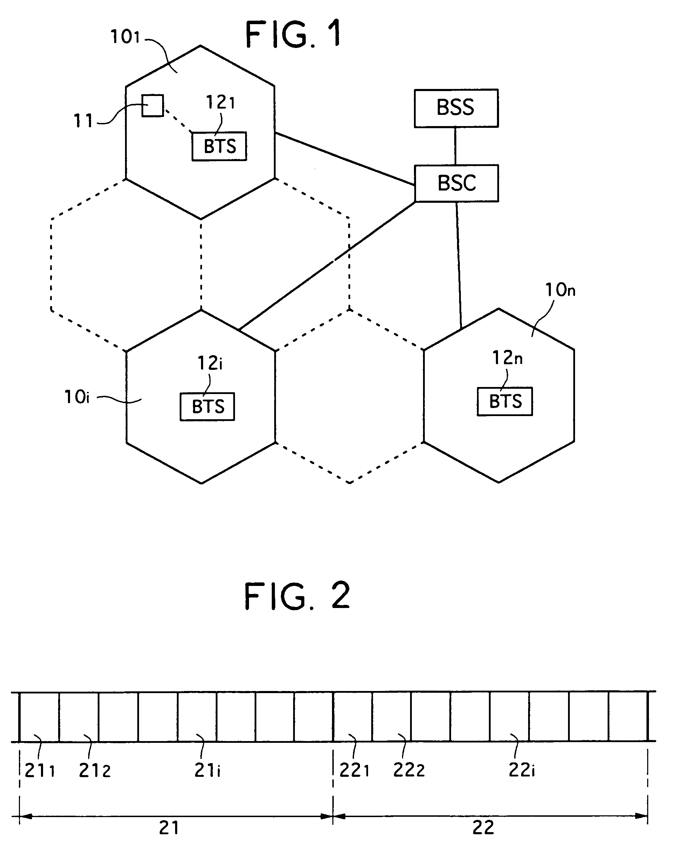

Comme illustré en figure 1, un réseau de radiocommunication cellulaire est constitué d'une pluralité de cellules 10₁, 10ᵢ, 10ₙ préférentiellement adjacentes, couvrant un espace géographique dans lequel peuvent évoluer des stations mobiles 11. Dans l'exemple détaillé ci-après, le réseau de référence sera un réseau de type GSM.

Pour chaque cellule 10ᵢ, les stations mobiles 11 qui s'y trouvent établissent une communication avec une station de base (BTS) 12ᵢ, couvrant ladite cellule 10ᵢ correspondante. Dans un réseau de type GSM (voir notamment pour référence l'ouvrage de M. MOULY et M.B. PAUTET ISBN 2-9507190-0-7 intitulé "The GSM System for Mobile Communications" (le système GSM pour les communications avec des mobiles), ainsi que les spécifications GSM), les stations de base BTS sont sous le contrôle d'une station BSC (Base Station Group), elles-mêmes supervisées par un module central de commande du réseau BSS (Base Station System).

Les communications établies entre une station de base 12₁ et une station mobile 11 se trouvant dans la cellule correspondante 10₁ peuvent emprunter plusieurs canaux, à savoir entre autres :
- un canal de trafic bidirectionnel (TCH), qui sert à l'acheminement des informations de l'utilisateur (User Information), sous forme de signaux de paroles ou de données ;
- des canaux de signalisation, tels qu'un canal SACCH (Slow Associated Control Channel, pour désigner un Canal de Commande Associé Lent), ou encore un BCCH (Broadcast Control Channel pour Canal de Contrôle de Diffusion).

Le canal BCCH est utilisé par le système pour adresser à une station mobile des informations de signalisation lorsque ladite station mobile se trouve en mode veille. Les informations de signalisation sont acheminées à un mobile à travers le canal SACCH lorsque la station mobile est en mode connecté. Les informations de signalisation sont par exemple des instructions ou des paramètres liés au fonctionnement du réseau.

En fait, on notera que le canal SACCH est entrelacé, et donc en quelque sorte intégré au canal de trafic TCH.

Les communications peuvent également emprunter un canal SDCCH (Stand Alone Dedicated Control CHannel). Ce type de canal est constitué d'une multi-trame indépendante des canaux TCH, formée d'un multiplex temporel à deux niveaux (chaque "time slot" peut accueillir différentes communications suivant la trame à laquelle il appartient ), et associée le cas échéant à une liste de fréquences exploitables (en saut de fréquence ou non).

Dans les spécifications du GSM il existe d'autres canaux qui ne sont pas mentionnés ici. L'homme du métier pourra le cas échéant recourir à un ou plusieurs de ces autres canaux, s'il le souhaite, pour acheminer certains des signaux nécessaires à la mise en oeuvre du procédé de l'invention en substitution des canaux ci-dessus.

Comme représenté en Figure 2, les communications bidirectionnelles sont acheminées dans un multiplex temporel dont les trames successives 21, 22 sont formées d'intervalles de temps 21₁, 21₂,... ; 22₁, 22₂, ... (en Anglais "time slots") contenant chacun au moins un canal de communication.

En conséquence, chaque communication est acheminée par segments dans un intervalle de temps de même rang 21ᵢ, 22ᵢ, ... sur plusieurs trames 21, 22 du multiplex.

Plusieurs communications peuvent être acheminées dans un même intervalle de temps dès lors que plusieurs fréquences sont exploitables (c'est-à-dire appartiennent à la "liste des fréquences" associée à l'intervalle de temps et/ou à la trame) : chaque communication peut être acheminée sur une fréquence distincte, ou encore, de façon préférentielle, chaque communication peut utiliser plusieurs fréquences (technique du saut de fréquence, en anglais "frequency hopping"), en utilisant tout en partie des fréquences exploitables de telle façon qu'une même fréquence ne soit évidemment exploitée que pour une seule communication à tout instant donné de l'intervalle de temps.

La procédure de redéfinition fréquentielle suivant l'invention consiste à modifier la liste des fréquences, en remplaçant tout en partie de N fréquences initiales par M nouvelles fréquences. Tous les cas de figures sont envisageables: N > M ; N < M ; N = M, avec remplacement de toutes les fréquences en seulement certaines d'entre elles.

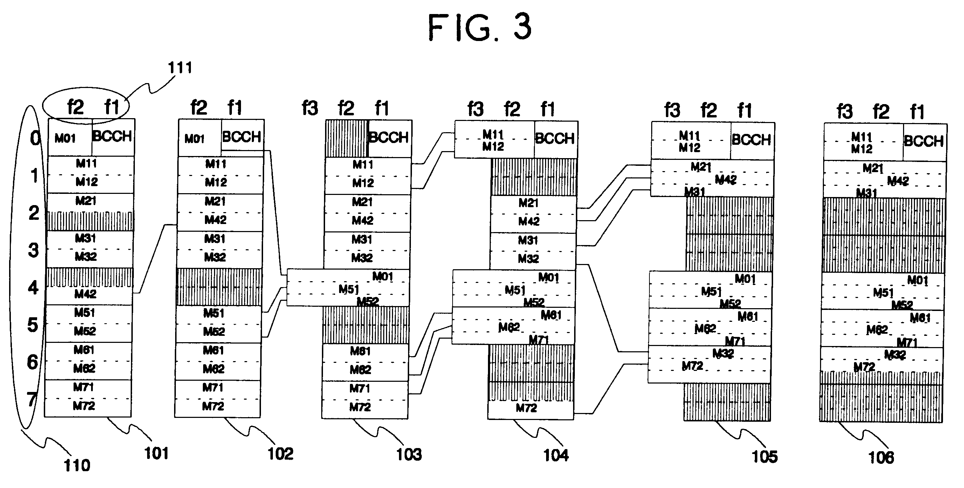

Afin d'illustrer le processus de mise en oeuvre de l'invention, la figure 3 représente une première méthode de réalisation de la redéfinition de fréquence conformément à l'invention, mise en oeuvre dans une configuration de trame simplifiée.

L'examen de la table des allocations 101 avant le début de la procédure fait apparaître les points suivants :
- la cellule utilise un jeu de deux fréquences (111) f1 et f2 ;
- les mobiles M01, M11, M12, M21, ..., M72 sont répartis comme indiqués sur les 8 time slots (110) numérotés de 0 à 7.

Chaque time slot, à l'exception du time slot 0, peut gérer deux mobiles sur deux canaux de communication. Les différents canaux de communication d'un même time slot sont distingués les uns des autres par le fait qu'ils utilisent les mêmes fréquences mais à des moments différents. Dans l'exemple de la figure 1, il reste deux canaux non actifs sur les time slots 2 et 4.

Sur le time slot 0, la fréquence f1 est réservée au BCCH (intervalle de temps "particulier"). Sur la seule fréquence restante, il ne peut donc y avoir qu'un seul mobile M01.

La redéfinition de fréquence de l'exemple consiste à ajouter une fréquence f3 au jeu de fréquences (111) de la cellule.

Pour ce faire, le procédé suivant est utilisé.

Dans un premier temps, un time slot est libéré. A cette fin, le mobile M42 est déplacé du time slot 4 au time slot 2 par une procédure d'assignation ("assignment" en anglais). Ce procédé est plus rapide qu'un handover (transfert intercellulaire) et lui est préféré lorsque le mobile doit changer de canal sans changer de cellule. A la fin de la procédure d'assignation, le time slot 4 est entièrement libéré et on obtient la répartition 102.

Le time slot 4 étant libre, il est maintenant possible de lui allouer les trois fréquences f1, f2 et f3 sans perturber des communications en cours.

On réitère alors la procédure de libération de time slot, en déplaçant 3 mobiles vers le time slot 4. Dans l'exemple de la figure 1, les mobiles M51 et M52 du time slot 5 ainsi que le mobile M01 du time slot 0 sont déplacés vers le time slot 4 par une procédure d'assignation.

A la fin de la procédure d'assignation, le time slot 5 est entièrement libéré, le time slot 0 ne porte plus que le canal BCCH et on obtient la répartition 103.

Le time slot 5 étant libre, il est maintenant possible de lui allouer les trois fréquences f1, f2 et f3 sans perturber des communications en cours.

Le time slot 0 étant libre à l'exception du BCCH, il est maintenant possible de lui allouer les deux fréquences f2 et f3 sans perturber des communications en cours.

On réitère alors la procédure de libération de time slot suivant les mêmes principes que ci-dessus. A la fin de la procédure, on obtient la répartition 104 dans laquelle les time slots 1 et 6 sont entièrement libres : on change leur jeu de fréquences comme précédemment.

Une nouvelle procédure de libération de time slot amène à la répartition 105 où les time slots 2, 3 et 7 sont libres de toute communication : on peut leur allouer les trois fréquences f1, f2 et f3, permettant d'aboutir à la répartition 106 : tous les time slots peuvent maintenant utiliser les trois fréquences f1, f2 et f3.

On remarquera que dans cette méthode, un seul mobile a été déplacé deux fois (M42).

Il est évident que si un time slot avait été entièrement libre, il n'aurait pas été nécessaire de déplacer deux fois le même mobile : le procédé, commençant alors comme en 102, peut conduire à 106 sans jamais déplacer deux fois un même mobile.

On remarquera également que si plus d'un time slot avaient été libre, il aurait été possible de mener en parallèle la libération de plusieurs time slots, diminuant ainsi la durée totale de la procédure.

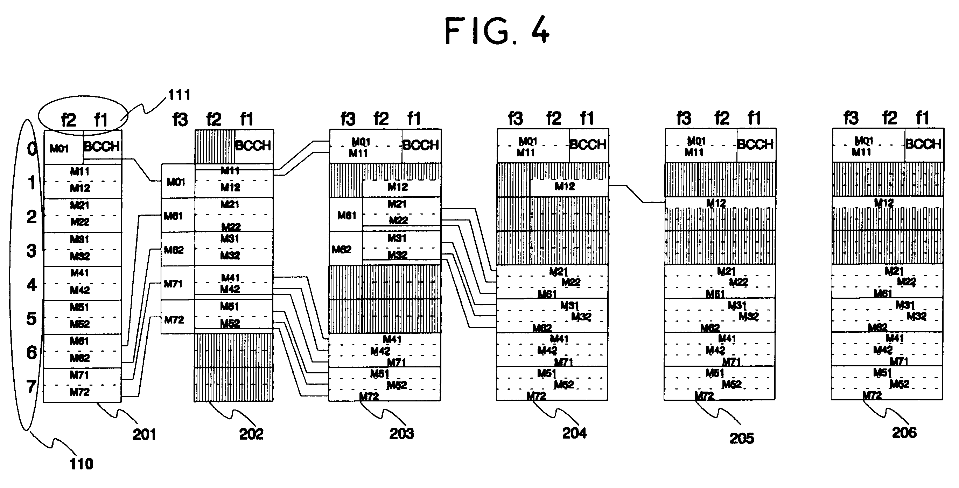

La figure 4 représente une deuxième méthode de mise en oeuvre de l'invention pour ajouter une fréquence, qui est utilisable même quand tous les canaux de trafic sont occupés, en début de procédure.

A l'étape 201, la cellule utilise le jeu de fréquence 111 et 15 mobiles utilisent la totalité de la capacité de trafic de la cellule.

Contrairement à l'exemple précédent, il n'est pas possible de libérer un time slot en assignant un canal déjà existant à un mobile puisqu'ils sont tous pris.

Pour résoudre ce problème, le procédé consiste à utiliser par avance la fréquence f3 de façon isolée sur des time slots :
le mobile M01 est déplacé sur le time slot 1 avec la fréquence f3,
le mobile M61 est déplacé sur le time slot 2 avec la fréquence f3,
le mobile M62 est déplacé sur le time slot 3 avec la fréquence f3,
le mobile M71 est déplacé sur le time slot 4 avec la fréquence f3,
le mobile M72 est déplacé sur le time slot 5 avec la fréquence f3,

On obtient alors la répartition 202 dans laquelle il est possible de redéfinir les jeux de fréquences pour les time slots 6, 7 et 0, en leur ajoutant systématiquement la fréquence f3.

La méthode du premier exemple peut alors être menée sans problème particulier pour aboutir à la répartition 206, par les étapes intermédiaires 203, 204 et 205.

Dans cet exemple comme dans le précédent, il est possible qu'un des time slots soit utilisé pour gérer des canaux SDDCH : au lieu d'un seul mobile par canal, il peut y avoir 8 mobiles gérés par 8 sous-canaux logiques correspondant à une répartition temporelle telle que chacun des mobiles peut émettre et recevoir à son tour sur ce même time slot. Dans ce cas-là, il faudra faire 8 assignations pour déplacer les mobiles d'un time slot à l'autre.

Le même problème existe lorsque la communication est faite en mode demi-débit avec des mobiles : deux mobiles se partageant alors le même canal, il faudra alors deux procédures d'assignation pour libérer un canal.

Le retrait d'une fréquence est l'opération inverse de l'ajoût d'une fréquence. Il sera expliqué à partir de la figure 1 afin de montrer les similitudes avec l'ajoût d'une fréquence.

On suppose que le nombre de canaux disponibles après la redéfinition de fréquence est suffisant pour accepter tous les mobiles présents avant le début de la redéfinition de fréquence.

En 106, les "time slots" 2, 3 et 7 sont libres. S'ils ne l'étaient pas, une procédure telle que celle décrite pour le passage de 101 à 102 peut être suivie pour en libérer au moins 1.

Sur ces time slots libres, on retire la fréquence f3 puis on déplace les mobiles sur les time slots redéfinis. En suivant la figure 1 à l'envers, de 106 à 101, on obtient un mode de réalisation simple de cette opération. On notera que le processus n'étant pas exactement symétrique, un autre mobile aurait dû être déplacé vers le time slot 7 lors du passage de 105 à 104: à chaque étape il faut toujours déplacer un maximum de mobiles vers des time slots déjà redéfinis.

## Revendications

**1)** Procédé de redéfinition de fréquence pour un système de radiocommunication cellulaire mis en oeuvre au sein d'un réseau de cellules géographiques parcouru par des stations mobiles, dans lequel une communication est établie avec un mobile dans un canal de communication disponible dans la cellule dans laquelle se trouve ladite station mobile,
les communications étant acheminées dans un multiplex temporel dont les trames successives sont formées d'intervalles de temps ("time-slots") contenant chacun au moins un canal de communication, chaque communication étant acheminée par segments dans un même intervalle de temps sur plusieurs trames du multiplex,
chaque canal de communication étant en outre défini par une liste de fréquences exploitables pour assurer ladite communication, ladite liste de fréquences étant redéfinissable, sous commande d'un module de gestion du réseau de radiocommunication, de façon à remplacer une première liste de N fréquences par une seconde liste de M fréquences (M égal à ou différent de N),
caractérisé en ce que le remplacement de la première liste de fréquences (f1,f2) par la seconde (f1,f2,f3) est effectué intervalle de temps par intervalle de temps, en libérant pas à pas chaque intervalle de temps par suppression de toute communication dans ledit intervalle, puis en assurant une redéfinition fréquentielle dudit intervalle de temps libéré en lui affectant ladite seconde liste de M fréquences, et enfin en rendant ledit intervalle de temps à nouveau disponible au trafic.

**2)** Procédé selon la revendication 1 caractérisé en ce que, dans le cas où la seconde liste de fréquences comprend au moins autant de fréquences que la première, le remplacement de la première liste de fréquences par la seconde est effectué intervalle de temps par intervalle de temps, selon le processus suivant :
- on libère au moins un premier intervalle de temps par suppression de toute communication dans ledit intervalle de temps ;
- on assure la redéfinition fréquentielle dudit premier intervalle de temps libéré en lui affectant ladite seconde liste de M fréquences, et on rend ledit premier intervalle de temps à nouveau disponible au trafic ;
- on libère un second intervalle de temps par transfert des communications dudit second intervalle de temps audit premier intervalle de temps ;
- on assure la redéfinition fréquentielle dudit second intervalle de temps libéré en lui affectant ladite seconde liste de M fréquences, et on rend ledit second intervalle de temps libéré à nouveau disponible au trafic ;
- on poursuit itérativement le transfert de communications d'intervalle de temps en intervalle de temps, jusqu'à obtenir une redéfinition fréquentielle de tous les intervalles de temps du canal de communication.

**3)** Procédé selon l'une quelconque des revendications 1 et 2 caractérisé en ce que le premier intervalle de temps libéré est celui qui se libère naturellement le premier.

**4)** Procédé selon l'une quelconque des revendications 1 à 3 caractérisé en ce que l'étape de libération de chaque intervalle de temps est constituée d'au moins une procédure appartenant au groupe comprenant :
- la réaffectation intra-cellulaire d'au moins une communication dudit intervalle de temps à un autre intervalle de temps du multiplex ;
- la réaffectation inter-cellulaire d'au moins une communication dudit intervalle de temps à un canal de communication d'une autre cellule du réseau ;
- l'interruption forcée d'au moins une communication dudit intervalle de temps.

**5)** Procédé selon l'une quelconque des revendications 1 à 3 caractérisé en ce que l'étape de libération de chaque intervalle de temps est constituée d'au moins une procédure appartenant au groupe comprenant :
- l'attente d'une libération naturelle d'au moins une communication dudit intervalle de temps ;
- l'interdiction d'affectation d'une nouvelle communication dans ledit intervalle de temps.

**6)** Procédé selon l'une quelconque des revendications 1 à 3 caractérisé en ce que l'étape de libération de chaque intervalle de temps consiste à :
- attendre pendant un délai prédéterminé une libération naturelle d'au moins un intervalle de temps ;
- à défaut de libération naturelle pendant ledit délai prédéterminé, effectuer une libération forcée selon une des procédures de la revendication 4.

**7)** Procédé selon l'une quelconque des revendications 1 à 6 caractérisé en ce que, dans le cas où la seconde liste de fréquence comprend un nombre de fréquences supérieur à celui de la première liste conduisant à la création de canaux de communication additionnels, on libère au moins un intervalle de temps par transfert des communications dudit intervalle à libérer sur lesdits nouveaux canaux additionnels.

**8)** Procédé selon l'une quelconque des revendications 1 à 7 caractérisé en ce que, dans le cas où la redéfinition fréquentielle consiste à changer au moins une fréquence de la liste de fréquences, le changement de fréquence devant être réalisé simultanément sur tous les intervalles de temps, on met en oeuvre deux fois successivement le procédé selon l'une quelconque des revendications 1 à 6 :
- une première fois afin de libérer dans chaque intervalle de temps la fréquence à remplacer, afin de la supprimer ;
- une seconde fois afin d'introduire la nouvelle fréquence destinée à remplacer la fréquence supprimée.

**9)** Procédé selon l'une quelconque des revendications 1 à 8 caractérisé en ce que, dans le cas où une redéfinition fréquentielle intervient alors qu'un transfert appartenant au groupe comprenant les transferts vers une autre cellule et les demandes de premier accès est en cours, le canal correspondant et associé à l'ancienne liste de fréquences à remplacer n'est considéré comme libéré qu'après validation du succès dudit transfert.

**10)** Procédé selon la revendication 9 caractérisé en ce que le canal occupé par ledit mobile et associé à l'ancienne liste de fréquences à remplacer n'est considéré comme libéré qu'après écoulement d'un délai prédéterminé.

**11)** Procédé selon l'une quelconque des revendications 1 à 10 caractérisé en ce que, dans le cas où un transfert appartenant au groupe comprenant le transfert d'un mobile depuis une autre cellule et la demande de premier accès, intervient au moment de la redéfinition fréquentielle, la communication est établie de préférence sur un intervalle de temps déjà associé à la nouvelle définition fréquentielle.

**12)** Procédé selon l'une quelconque des revendications 1 à 11 caractérisé en ce que, dans le cas où la redéfinition fréquentielle concerne une trame comprenant un intervalle de temps particulier incluant un canal de communication utilisant une fréquence balise non affectée par la redéfinition fréquentielle, le premier intervalle de temps libéré est ledit intervalle de temps particulier.
